# FASCICULE DE BREVET EUROPEEN

(11) **EP 2 735 089 B1**
(45) Date de publication et mention de la délivrance du brevet: **27.02.2019**
(21) Numéro de dépôt: 12733796.2
(22) Date de dépôt: 21.06.2012
(51) Int. Cl.: H02K 7/116, H02K 7/14, B60N 2/02, B60N 2/225, F16H 49/00, F16H 7/02, H02K 11/33

(54) **DISPOSITIF D'ENTRAINEMENT A MOTEUR ELECTRIQUE ET REDUCTEUR**
ELEKTROGETRIEBEMOTORISCHE ANTRIEBSANORDNUNG
DRIVE WITH ELECTRIC MOTOR AND GEARBOX

(30) Priorité: 21.07.2011 FR 1156628
(43) Date de publication de la demande: 28.05.2014
(73) Titulaire: FAURECIA Sièges d'Automobile, 92000 Nanterre (FR)
(72) Inventeur: PERA, Thierry, F-90000 Belfort (FR); NAVATTE, Nicolas, F-14110 Conde Sur Noireau (FR); DENIS, Julien, PL-20-243 Lublin (PL)
(74) Mandataire: Cabinet Plasseraud
(86) Numéro de dépôt international: PCT/FR2012/051415
(87) Numéro de publication internationale: WO 2013/011218

(56) Documents cités:
- WO-A1-2008/028591
- WO-A2-2010/029010
- DE-A1-102006 007 755
- US-A1- 2006 205 559
- US-A1- 2007 029 893

## Description

La présente invention est relative aux dispositifs d'entrainement à moteur électrique et réducteur arrangés pour entrainer un organe dans un véhicule automobile, par exemple pour déplacer un élément mobile par rapport à un élément de référence.

Elle concerne plus particulièrement un dispositif d'entrainement entrainant un mécanisme d'articulation motorisée reliant une partie d'un siège de véhicule à une autre partie du siège, par exemple un dossier de siège à une assise de siège.

Dans l'art antérieur connu, les articulations motorisées comprennent un moteur à courant continu et un réducteur pour entrainer un organe de sortie qui déplace un élément mobile par rapport à un élément de référence.

Dans le cas d'un siège automobile, les articulations motorisées comprennent un moteur à courant continu, un réducteur et un mécanisme d'articulation à réduction, dont l'un des flasques est relié au dossier et l'autre flasque est relié à l'assise.

De tels moteurs à courant continu présentent un encombrement assez important et se présentent généralement comme un cylindre dont la taille implique des contraintes d'implantation gênantes.

Il est aussi connu les documents US2007/029893, WO2008/028591 et WO2010/029010.

Il est donc apparu un besoin pour proposer des dispositifs d'entrainement à moteur électrique et réducteur (que l'on peut aussi appeler 'motoréducteur') ayant des dimensions permettant d'optimiser leur implantation, en particulier dans un espace confiné d'une automobile comme par exemple dans un siège automobile ou dans une porte automobile.

L'invention propose un dispositif d'entrainement à moteur électrique et réducteur, arrangé pour entrainer un organe de sortie dans un véhicule automobile, selon un mouvement de rotation autour d'un axe principal, comprenant:
- un moteur brushless ayant un rotor tournant autour d'un axe de rotor parallèle à l'axe principal,
- un réducteur elliptique interposé entre le moteur brushless et l'organe de sortie, le réducteur elliptique comprenant un organe entraineur et un anneau elliptique déformable, déformé par l'organe entraineur lors de sa rotation, contre une couronne d'appui,
- une unité de commande agencée à proximité immédiate du moteur brushless, destinée à commander ledit moteur brushless.

Dans la présente description, l'expression 'moteur brushless' doit être comprise comme équivalente à 'moteur sans balais'. De même, le terme 'Rpm' doit être compris comme le nombre de rotation par minute, donc équivalent à 'tours/minute'.

Grâce à ces dispositions, on peut optimiser les dimensions de tels motoréducteurs pour faciliter leur implantation.

Accessoirement cela permet aussi de réduire le poids et les bruits de fonctionnement de tels ensembles moteur-réducteur.

Dans divers modes de réalisation de l'invention, on peut éventuellement avoir recours en outre à l'une et/ou à l'autre des dispositions suivantes :
- le rapport de réduction du réducteur elliptique est compris entre 50 et 150 et le régime de rotation du moteur compris entre 2000 Rpm et 7000 Rpm ; ce qui permet d'obtenir un taux de réduction usuel pour le réducteur elliptique et un régime de rotation optimal pour le moteur ;
- le réducteur et le moteur sont disposés coaxialement, l'axe du rotor étant confondu avec l'axe principal ; l'encombrement radial est ainsi diminué ;
- le réducteur et le moteur sont disposés l'un à coté de l'autre dans un plan perpendiculaire à l'axe principal, et sont reliés entre eux par une courroie ; l'encombrement axial est ainsi diminué ;
- l'unité de commande est arrangée pour commander le moteur selon des profils de courant avec des rampes de démarrage et d'arrêt ; on obtient alors des démarrages et des arrêts sans à-coups ;
- l'unité de commande est arrangée pour commander le moteur avec une fonction d'arrêt de sécurité ; on évite ainsi une surchauffe du moteur en cas d'obstacle ou de défaut ;
- le dispositif d'entraînement comprend en outre un boitier contenant l'unité de commande, le réducteur elliptique et le moteur brushless ; ce qui améliore l'intégration mécatronique.

L'invention vise également une armature de siège pour véhicule automobile comprenant une armature de dossier, une armature d'assise, et au moins un mécanisme d'articulation à réduction, reliant l'armature de dossier à l'armature d'assise, dans laquelle un arbre de commande est adapté pour entrainer l'articulation à réducteur, l'arbre de commande étant couplé à un dispositif d'entraînement tel que décrit précédemment.

Le dispositif d'entraînement peut comprendre en outre un second mécanisme d'articulation à réduction agencé sur le coté opposé au premier mécanisme d'articulation à réduction, l'arbre de commande traversant axialement le réducteur elliptique.

L'invention vise également un siège pour véhicule automobile comprenant au moins un dispositif d'entraînement tel que décrit précédemment.

D'autres aspects, buts et avantages de l'invention apparaîtront à la lecture de la description suivante de deux de ses modes de réalisation, donnés à titre d'exemples non limitatifs à l'aide des dessins joints sur lesquels :
- la figure 1 est une vue en perspective d'une armature de siège intégrant un dispositif d'entraînement selon un premier mode de réalisation de l'invention,
- la figure 2 est une vue en perspective partielle du dispositif d'entraînement de la Figure 1,
- la figure 3 est une vue éclatée du dispositif d'entraînement de la Figure 1,
- la figure 4 est une vue en coupe axiale du réducteur du dispositif d'entraînement de la figure 1,
- la figure 5 est une vue en coupe radiale du réducteur du dispositif d'entraînement de la figure 1, selon la ligne V-V de la figure 4,
- la figure 6 est une vue en perspective d'une armature de siège intégrant un dispositif d'entrainement selon un deuxième mode de réalisation de l'invention,
- la figure 7 est une vue éclatée du dispositif d'entrainement de la Figure 6,
- la figure 8 représente partiellement le dispositif d'entrainement de la Figure 6, vu du depuis le côté du réducteur,
- la figure 9 montre des chronogrammes de commande du moteur.

Sur les différentes figures, les mêmes références désignent des éléments identiques ou similaires.

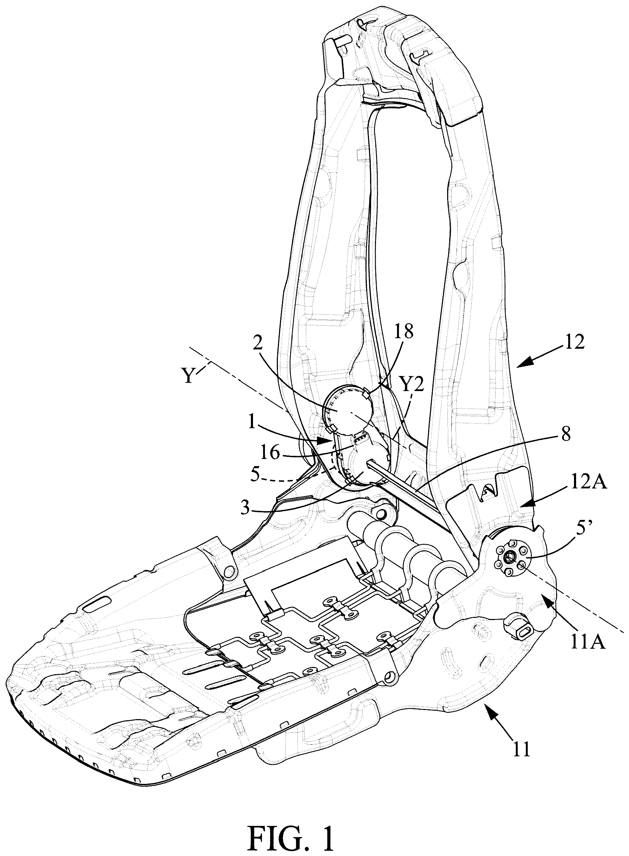

La figure 1 représente une vue en perspective d'une armature de siège intégrant un dispositif d'entrainement 1 selon un premier mode de réalisation de l'invention. Une telle armature est recouverte d'une matelassure et d'un tissu (non représentés) pour constituer un siège automobile.

L'armature en question comprend une structure d'assise 11 et une structure de dossier 12, montée à rotation sur la structure d'assise 11 autour d'un axe principal d'articulation Y. Au niveau de la zone d'articulation, la structure d'assise 11 comprend un flasque d'assise 11A et la structure de dossier 12 comprend un flasque de dossier 12A, les deux flasques en question 11A,12A étant fixés à un mécanisme d'articulation 5 à réduction. Le mécanisme d'articulation 5 peut être par exemple un mécanisme à réducteur hypocycloïde comme connu dans l'art des articulations motorisées.

Tel qu'illustré dans la Figure 1, le dispositif d'entrainement 1 permet de faire pivoter le dossier par rapport à l'assise, pour le réglage de la position angulaire de confort.

Il est noter que, selon l'invention, le dispositif d'entrainement 1 peut être prévu pour déplacer, dans un véhicule automobile, un élément mobile quelconque, monté mobile par rapport à un élément de référence grâce à un mécanisme d'articulation interposé entre l'élément mobile et l'élément de référence. Ceci peut s'appliquer en particulier à un mécanisme dans un siège ou à un mécanisme de lève-vitre dans une porte automobile.

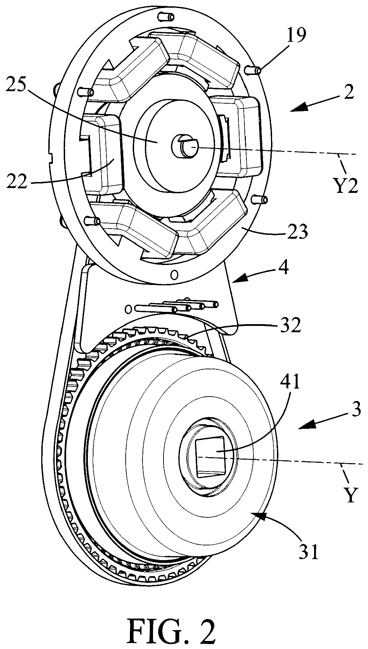

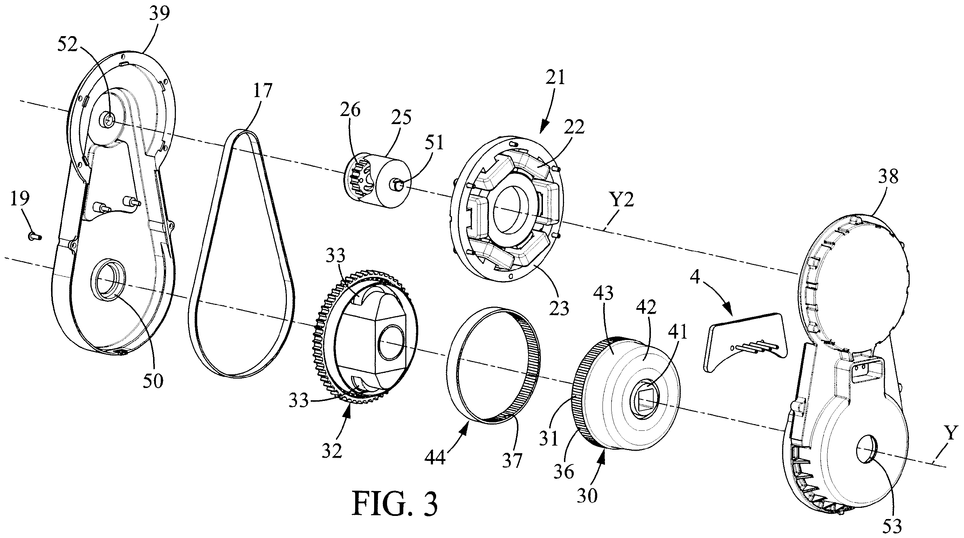

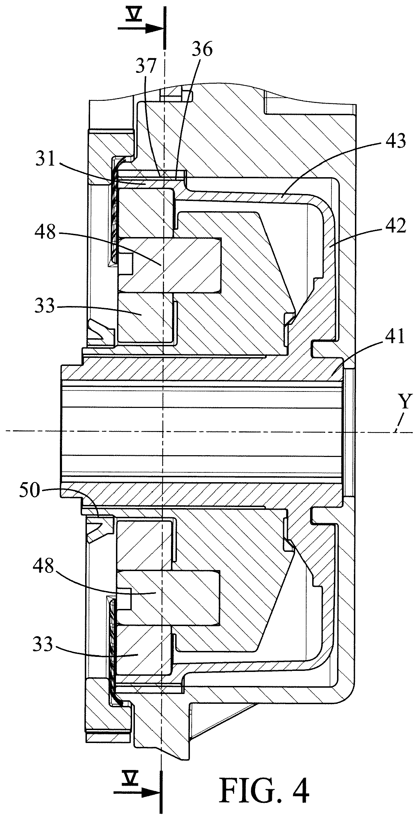

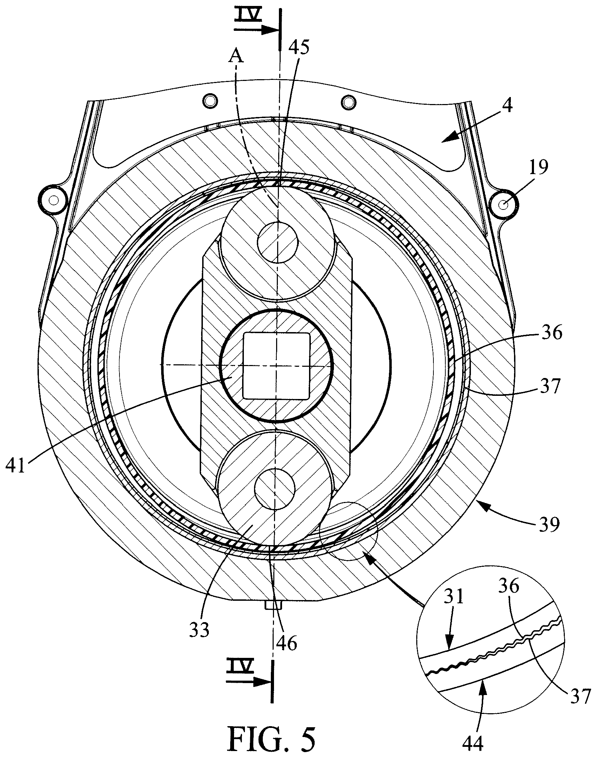

Comme illustré aux figures 1-5 ; le dispositif d'entrainement 1 comprend :
- un moteur brushless 2 ayant un rotor 25, tournant autour d'un axe de rotor Y2 parallèle à l'axe principal Y,
- un réducteur elliptique 3 interposé entre le moteur brushless 2 et un organe de sortie 8, le réducteur elliptique comprenant un organe entraineur 32 et un anneau elliptique déformable 31, déformé par l'organe entraineur lors de sa rotation, contre une couronne d'appui 44 radialement extérieure comme il sera détaillé plus loin,
- une unité de commande 4 agencée à proximité immédiate du moteur brushless 2, destinée à commander ledit moteur brushless, ladite unité de commande 4 étant reliée à un connecteur électrique 16, prévu pour alimenter électriquement en puissance et en signaux le dispositif d'entrainement 1.

Plus précisément, le dispositif d'entrainement 1 comprend un boitier de protection sous forme de deux demi carters 38,39 assemblés ensemble par des moyens de fixations comme des vis ou des rivets 19. Ce boitier permet de protéger les éléments internes du dispositif d'entrainement 1, à savoir notamment le moteur 2, le réducteur 3, et l'unité de commande 4.

Le moteur comprend un stator 21 ayant des bobines 22, une armature 23 en matériau magnétique et un rotor 25. Le rotor comprend un axe de rotor 51 supporté par des paliers 52 d'axe Y2 agencés dans les deux demi-carters 38,39.

Comme il est connu dans l'art des moteurs sans balai ou 'brushless', le rotor 25 est pourvu d'éléments à aimants permanents, se déplaçant avec le rotor 25 en vis-à-vis des bobines 22. Le pilotage du courant passant dans chaque bobine 22 permet de générer un champ magnétique tournant capable d'imprimer un mouvement de rotation au rotor. La vitesse de rotation du champ tournant et le taux de glissement du rotor peuvent être contrôlés par l'unité de commande 4. Typiquement, on choisira des vitesses de rotation comprises entre 2000 tours par minute (2000 Rpm) et 7000 tours par minute (7000 Rpm).

Au niveau du rotor 25, est relié à ce dernier un pignon de sortie 26 du moteur 2 lui-même relié à une courroie de transmission 17, par exemple en matériau élastomère, par exemple une courroie crantée.

En alternative à une courroie, la transmission pourrait être basée sur un engrenage classique à pignon ou tout autre moyen de transmission.

La courroie de transmission 17 entraine un organe entraineur 32 appartenant au réducteur elliptique 3 sur lesquels sont montés deux galets 33 dont les axes définissent un grand axe d'ellipse A.

Le réducteur 3 comprend, outre ledit organe entraineur 32, une roue 30 en forme générale de cuvette ayant un moyeu central 41, un disque de fond de cuvette 42, une jante annulaire 43 déformable et un anneau déformable 31 prolongeant ladite jante 43. L'anneau déformable 31 est équipé d'une première denture 36 sur son pourtour extérieur. Cet anneau ou flasque déformable 31 présente au repos et en l'absence de contraintes une forme annulaire. Cependant, dans la configuration présentée du réducteur, le grand axe A de l'organe entraineur déforme radialement cet anneau vers l'extérieur.

La roue 30 est supporté dans une liaison à rotation par des paliers 50,53 agencés dans le boitier de protection au niveau de l'axe Y dans les demi-carters 38,39.

Par ailleurs, le réducteur 3 comprend une couronne d'appui 44 avec une deuxième denture annulaire fixe 37, immobile par rapport au boitier de protection, et orientée radialement vers l'intérieur. Les première et deuxième dentures 36,37 sont engagées l'une avec l'autre, au moins sur une partie de la périphérie, et préférentiellement comme représenté sur deux zones diamétralement opposées 45,46 correspondant au grand axe 1 de l'ellipse.

En revanche, dans les autres zones périphériques, le rayon de l'anneau déformable 31 est inférieur et les deux dentures ne sont pas en prise, ce en quoi l'anneau déformable constitue un anneau elliptique, ce qui caractérise le réducteur.

Par ailleurs, le nombre de dents sur la première denture 36 est différent du nombre de dents sur la deuxième denture 37, la différence peut être de une seule dent ou de quelques dents.

En conséquence de quoi, à chaque fois que l'organe entraineur 32 fait un tour complet, le flasque déformable 31 et donc la roue 30 se décale angulairement du nombre de dents correspondant à la différence précitée.

Il est à noter que la forme de détail des dentures 36,37 peut être choisie parmi toute forme connue pour les dentures, en particulier en fonction des efforts supportés par le dispositif d'entrainement et par les contraintes éventuelles d'absence de bruyance de fonctionnement.

Par exemple, dans une configuration préférée, le nombre de dents sur la première denture sera de 100 et le nombre de dents sur la deuxième denture sera de 99 ; on obtient ainsi un taux de réduction de 100. De façon générale, on choisira un taux de réduction compris entre 50 et 150.

Ces choix permettent d'obtenir un taux de réduction usuel pour le réducteur elliptique et un régime de rotation optimal pour le moteur.

Selon le premier mode de réalisation, le réducteur et le moteur brushless 2 sont disposés l'un à coté de l'autre sensiblement dans un plan perpendiculaire à l'axe principal Y, et sont reliés entre eux par la courroie 17. On obtient ainsi une configuration dite 'à plat', à savoir une dimension selon l'axe Y avantageuse, par exemple inférieure à 4 cm, et le dispositif peut être implanté du coté intérieur contre le flasque de dossier 12.

L'organe de sortie 8, couplé au moyeu central 41, se présente comme un arbre 8 qui entraine au moins un mécanisme d'articulation 5 à réducteur. Dans l'exemple représenté, l'arbre 8 est de section carrée et entraine deux mécanismes d'articulation 5,5' à savoir un premier mécanisme d'articulation 5 situé du coté du dispositif d'entrainement 1 et un second mécanisme d'articulation 5' situé du coté opposé.

L'arbre 8 traverse le réducteur 3 de part en part au niveau du moyeu 41 à évidement central carré déjà mentionné.

L'unité de commande 4 est configurée pour piloter le courant dans chaque bobine, et pour surveiller le bon fonctionnement du moteur brushless.

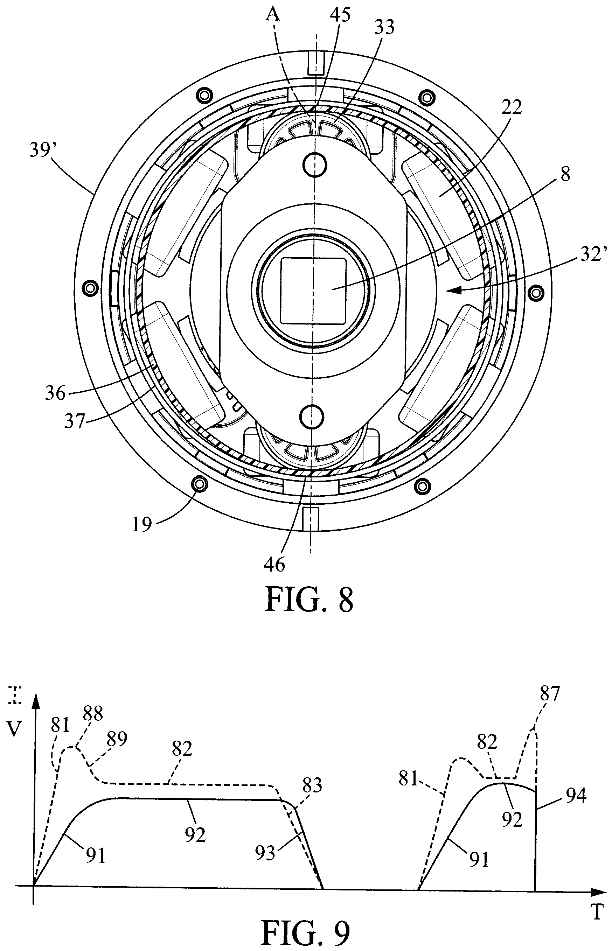

En particulier, l'unité de commande 4 peut commander le moteur selon des profils de courant avec des rampes de démarrage et d'arrêt, comme expliqué en détails plu loin et illustré sur la figure 9. On obtient alors des démarrages et des arrêts sans à-coups. Cela permet aussi de limiter l'émission d'interférences électromagnétiques liées aux transitions de démarrage et d'arrêt.

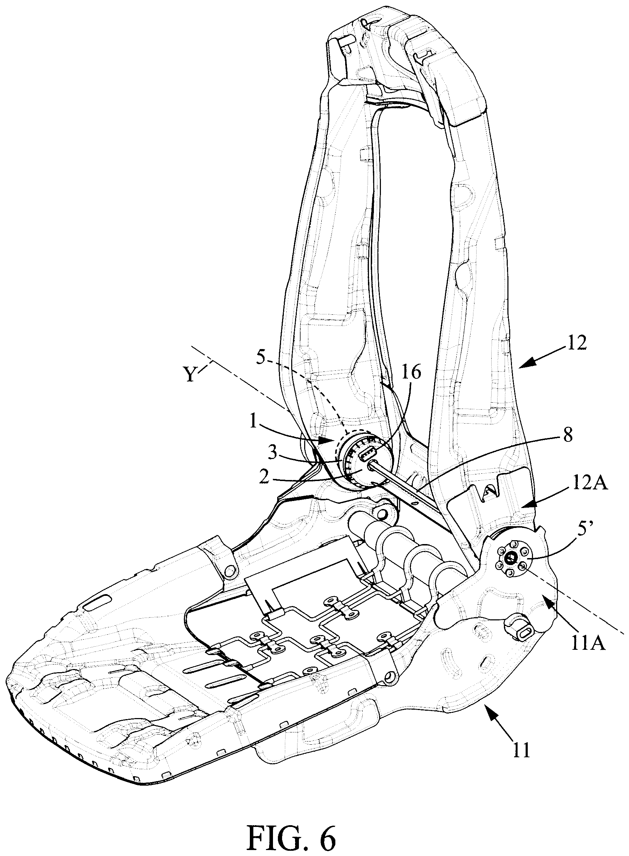

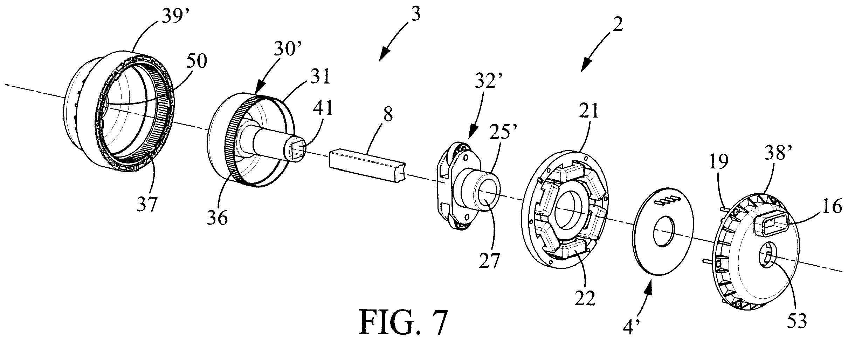

Selon un deuxième mode de réalisation, représenté aux figures 6 à 8, le réducteur 3 et le moteur brushless 2 sont disposés coaxialement, l'un en bout de l'autre, l'axe du rotor Y2 étant confondu avec l'axe principal Y. On obtient ainsi une configuration dite 'cylindrique axiale', à savoir une dimension radiale avantageuse, par exemple un diamètre inférieur à 6 cm, et le dispositif peut être implanté du coté intérieur contre le flasque de dossier 12, comme illustré à la Figure 6.

Dans ce second mode de réalisation, seuls les éléments qui diffèrent de ceux du premier mode seront commentés, les autre étant considérés comme similaires ou identiques.

Le boitier de protection comprend deux demi carters 38',39' fixé entre eux par des moyens de fixations 19, et fixés à l'armature de dossier 12 par des moyens non représentés mais similaires aux clips 18 représentés pour le premier mode.

L'unité de commande 4' présente une forme physique différente, à savoir une forme de galette avec un trou central, mais réalise les mêmes fonctions que l'unité de commande 4 du premier mode.

Le dispositif Le rotor 25' est couplé directement à l'organe entraineur 32' par un couplage direct sans passer par une courroie.

Dans le second mode de réalisation, l'arbre 8 passe au travers d'un trou axial 27 traversant agencé dans le rotor 25' du moteur et au travers de l'unité de commande 4'.

L'organe entraineur 32' comprend des galets dont les axes définissent le grand axe de l'ellipse A.

La roue 30' comprend des éléments similaires à la roue 30 décrite pour le premier mode, en particulier un moyeu central avec un évidement de section carrée et une première denture périphérique extérieure 36, qui s'engage aux endroits du grand axe de l'ellipse formée par l'anneau déformable 31 dans une deuxième denture 37 aménagée directement dans le demi-carter 39'.

La figure 9 illustre des chronogrammes de commande du moteur, tel que pilotés par l'unité de commande 4,4'. Sur le premier chronogramme est illustrée une séquence de commande normale avec des rampes de démarrage et d'arrêt, la vitesse étant représentée en trait plein et le courant en trait mixte. Lorsque l'unité de commande lance une séquence de déplacement (sur appui utilisateur ou sur un retour à une position mémorisée par exemple) le moteur est commandé avec une rampe de démarrage qui montre un accroissement du courant 81 à partir de 0 jusqu'à une bosse 88 puis une décroissance 89 jusqu' à un courant stabilisé 82 dit de croisière. Pendant ce temps, la vitesse du rotor croit de 0 jusqu'à la vitesse de croisière 92 par une rampe douce 91. Lorsque la rotation doit être arrêtée, l'unité de commande entreprend une rampe d'arrêt dans laquelle le courant 83 et la vitesse 93 décroissent sensiblement ensemble vers 0.

Sur un deuxième chronogramme est illustré un arrêt de sécurité : le début de la séquence est identique à la précédente ; mais à un instant, l'unité de commande 4'4' détecte une anomalie pendant le mouvement de croisière, par exemple un obstacle empêchant le mouvement, ce qui provoque un accroissement du courant 87 et une diminution de la vitesse. Alors l'unité de commande cesse immédiatement la commande 94 et la vitesse passe très vite à 0.

Il est à noter que l'unité de commande 4,4' peut gérer plusieurs fonctions annexes comme la gestion de positions mémorisées, la compensation des variations de la tension d'alimentation, l'aide au diagnostic, etc.

## Revendications

1. **Armature de siège** pour véhicule automobile comprenant une armature de dossier (12), une armature d'assise (11), et au moins un premier mécanisme d'articulation à réducteur (5), reliant l'armature de dossier à l'armature d'assise selon un mouvement de rotation autour d'un axe principal (Y), un arbre de commande (8) adapté pour entrainer le premier mécanisme d'articulation à réducteur,
l'armature de siège comprenant en outre un dispositif d'entrainement (1) à moteur électrique et réducteur, arrangé pour entrainer l'arbre de commande (8), le dispositif d'entrainement comprenant:
- un moteur sans balais (2) ayant un rotor (25) tournant autour d'un axe de rotor (Y2) parallèle à l'axe principal,
- un réducteur elliptique (3) interposé entre le moteur sans balais (2) et l'arbre de commande (8), le réducteur elliptique (3) comprenant un organe entraineur (32) et un anneau elliptique déformable (31), déformé par l'organe entraineur (32) lors de sa rotation,
- une unité de commande (4;4') agencée à proximité immédiate du moteur sans balais (2), destinée à commander ledit moteur sans balais,
**caractérisé en ce que** le réducteur (3) et le moteur sans balais (2) sont disposés selon une configuration dite 'à plat', l'un à côté de l'autre dans un plan perpendiculaire à l'axe principal (Y), et sont reliés entre eux par une courroie (17),
le dispositif d'entrainement présentant une dimension optimisée selon l'axe Y,
et **en ce que** le dispositif d'entrainement est implanté du côté intérieur contre l'armature de dossier.

2. Armature de siège selon la revendication 1, dans lequel le rapport de réduction du réducteur elliptique (3) est compris entre 50 et 150 et le régime de rotation du moteur (2) est compris entre 2000 tours/min et 7000 tours/min.

3. Armature de siège selon l'une des revendications 1 à 2, dans lequel l'unité de commande (4;4') est arrangée pour commander le moteur selon des profils de courant avec des rampes de démarrage et d'arrêt.

4. Armature de siège selon l'une des revendications 1 à 3, dans lequel l'unité de commande est arrangée pour commander le moteur avec une fonction d'arrêt de sécurité.

5. Armature de siège selon l'une des revendications 1 à 4, comprenant en outre un boitier contenant l'unité de commande (4; 4'), le réducteur elliptique (3) et le moteur sans balais (2).

6. Armature de siège pour véhicule automobile selon l'une des revendications 1 à 5, comprenant un second mécanisme d'articulation à réducteur (5') agencé sur le côté opposé par rapport au premier mécanisme d'articulation à réducteur (5), l'arbre de commande traversant axialement le réducteur elliptique (3).

7. **Siège** pour véhicule automobile comprenant au moins une armature de siège selon l'une des revendications 1 à 6.

## Patentansprüche

1. Sitzarmatur für ein Automobilfahrzeug, aufweisend eine Rückenlehne-Armatur (12), eine Sitzfläche-Armatur (11) und mindestens einen ersten Getriebe-Gelenkmechanismus (5), der die Rückenlehne-Armatur mit der Sitzfläche-Armatur gemäß einer Drehbewegung um eine Hauptachse (Y) verbindet, eine Steuerwelle (8) zum Antreiben des ersten Getriebe-Gelenkmechanismus,
wobei die Sitzarmatur ferner eine Elektromotor/Getriebe-Antriebsvorrichtung (1) zum Antreiben der Steuerwelle (8) aufweist, wobei die Antriebsvorrichtung aufweist:
- einen bürstenlosen Motor (2) mit einem Rotor, der sich um eine zur Hauptachse parallele Rotorachse (Y2) dreht,
- ein zwischen dem bürstenlosen Motor (2) und der Steuerwelle (8) angeordnetes elliptisches Getriebe (3), wobei das elliptische Getriebe (3) ein Antriebselement (32) und einen verformbaren elliptischen Ring (31) aufweist, der von dem Antriebselement (32) bei seiner Drehung verformt wird,
- eine in unmittelbarer Nähe des bürstenlosen Motors (2) angeordnete Steuereinheit (4; 4') zur Steuerung des bürstenlosen Motors,
**dadurch gekennzeichnet, dass** das Getriebe (3) und der bürstenlose Motor (2) gemäß einer sogenannten "flachen" Konfiguration nebeneinander in einer zur Hauptachse (Y) senkrechten Ebene angeordnet sind und über einen Treibriemen (17) miteinander verbunden sind,
wobei die Antriebsvorrichtung eine gemäß der Achse Y optimierte Abmessung hat,
und dadurch, dass die Antriebsvorrichtung von der Innenseite gegen die Rückenlehne-Armatur eingebaut ist.

2. Sitzarmatur nach Anspruch 1, in welcher das Reduktionsverhältnis des elliptischen Getriebes (3) zwischen 50 und 150 ist und der Drehzahlbereich des Motors (2) zwischen 2000 Umdrehungen/Minute und 7000 Umdrehungen/Minute ist.

3. Sitzarmatur nach einem der Ansprüche 1 bis 2, in welcher die Steuereinheit (4; 4') konfiguriert ist, um den Motor gemäß Stromprofilen mit Start- und Stopprampen zu steuern.

4. Sitzarmatur nach einem der Ansprüche 1 bis 3, in welcher die Steuereinheit konfiguriert ist, um den Motor mit einer Sicherheitsstoppfunktion zu steuern.

5. Sitzarmatur nach einem der Ansprüche 1 bis 4, ferner aufweisend ein Gehäuse, das die Steuereinheit (4; 4'), das elliptische Getriebe (3) und den bürstenlosen Motor (2) enthält.

6. Sitzarmatur für ein Automobilfahrzeug nach einem der Ansprüche 1 bis 5, aufweisend einen zweiten Getriebe-Gelenkmechanismus (5'), der an der bezüglich des ersten Getriebe-Gelenkmechanismus (5) gegenüberliegenden Seite angeordnet ist, wobei die Steuerwelle sich axial durch das elliptische Getriebe (3) erstreckt.

7. Sitz für ein Automobilfahrzeug, aufweisend mindestens eine Sitzarmatur nach einem der Ansprüche 1 bis 6.

## Claims

1. Seat frame for a motor vehicle seat comprising a backrest frame (12), a seating part frame (11), and at least a first reduction hinge mechanism (5) connecting the backrest frame to the seating part frame, with a rotational movement about a main axis (Y), a drive shaft (8) adapted to drive the first reduction hinge mechanism, the seat frame further comprising a drive device (1) with electric motor and reduction gear, arranged to drive the drive shaft (8), the drive device comprising:
- a brushless motor (2) having a rotor turning about a rotor axis (Y2) parallel to the main axis,
- an elliptical reduction gear (3) interposed between the brushless motor (2) and the drive shaft (8), said elliptical reduction gear (3) comprising a drive member (32) and a deformable elliptical ring (31) deformed by the drive member (32) during its rotation,
- a control unit (4;4') arranged in the immediate proximity of the brushless motor (2), for controlling said brushless motor,
and **characterized in that** the reduction gear (3) and the brushless motor (2) are arranged according to a 'flat' configuration, one beside the other in a plane perpendicular to the main axis (Y), and are connected together by a belt (17),
the drive device exhibiting and optimized dimension along the main axis (Y),
and **in that** the drive device is located in an interior side of the backrest frame.

2. Seat frame device according to claim 1, wherein the reduction rate of the elliptical reduction gear (3) is between 50 and 150 and the rotational speed of the motor (2) is between 2000 revolutions/min and 7000 revolutions/min.

3. Seat frame device according to one of claims 1 to 2, wherein the control unit (4;4') is arranged to control the motor according to current profiles which ramp up and down for startup and shutdown.

4. Seat frame device according to one of claims 1 to 3, wherein the control unit is arranged to control the motor with a safety shutdown function.

5. Seat frame device according to one of claims 1 to 4, further comprising a housing containing the control unit (4;4'), the elliptical reduction gear (3), and the brushless motor (2).

6. Seat frame for a motor vehicle seat according to claim 5, comprising a second reduction hinge mechanism (5') arranged on the side opposite with regard to the first reduction hinge mechanism (5), with the drive shaft (8) passing axially through the elliptical reduction gear (3).

7. Motor vehicle seat comprising at least one drive device according to one of claims 1 to 6.
